# EUROPÄISCHE PATENTSCHRIFT

(11) **EP 1 273 827 B1**
(45) Veröffentlichungstag und Bekanntmachung des Hinweises auf die Patenterteilung: **27.10.2004**
(21) Anmeldenummer: 02012957.3
(22) Anmeldetag: 12.06.2002
(51) Int. Cl.: F16H 19/00, F16H 7/02

(54) **Linearantrieb**
Linear transmission device
Dispositif de transmission linéaire

(30) Priorität: 22.06.2001 DE 10130258
(43) Veröffentlichungstag der Anmeldung: 08.01.2003
(73) Patentinhaber: ContiTech Antriebssysteme GmbH, 30165 Hannover (DE)
(72) Erfinder: Göser, Hubert, 29451 Dannenberg (DE); Bederna, Christoph Dr., 31515 Wunstorf (DE)
(74) Vertreter: Patentanwälte Thömen & Körner

(56) Entgegenhaltungen:
- DE-A- 2 721 800
- DE-A- 2 910 373
- DE-A- 3 005 862
- DE-A- 3 724 564
- DE-C- 3 433 363
- US-A- 4 468 211

## Beschreibung

Die Erfindung betrifft einen Linearantrieb.

Solche Linearantriebe, bei denen die Umsetzung einer Drehbewegung in eine Linearbewegung durch Zahnriemen übernommen werden, sind bekannt (Deutsches Gebrauchsmuster G 84 26 813.1). Durch das Zahnprofil wird zwischen Zahnriemen und linearem Zahngegenstück ein Formschluss erzeugt, wodurch eine Übertragung der Drehbewegung in eine Linearbewegung des Zahngegenstückes möglich ist. Das Zahngegenstück ist üblicherweise als Zahnstange aus Stahl oder dergleichen ausgebildet. Allgemein ist die Zahnstange mit einer bestimmten Länge ausgebildet. Gemäß dem Gebrauchsmuster G 84 26 813.1 ist es aber auch denkbar, einzelne Zahnstangensegmente zu verwenden, die durch Lücken voneinander getrennt sind.

Der Zahnriemen, der üblicherweise aus einem elastomeren Material besteht, wird beispielsweise über Zahnritzel angetrieben und über Umlenkrollen mit dem Zahngegenstück in Eingriff gebracht. Durch zusätzlich angeordnete Niederhalterollen ist sichergestellt, dass auch genügend Zähne zwischen der Einlaufseite und der Auslaufseite des Zahnriemens im Eingriff mit dem Zahngegenstück bleiben. Durch Verstellung der Umlenkrollen wird der Zahnriemen vorgespannt, indem der gegenseitige Abstand der Umlenkrollen vergrößert wird.

Die bekannten Linearantriebe umfassen einen Zahnriemen mit Standardzahnprofil, das in ein entsprechend profiliertes Zahngegenstück gleicher Teilung eingreift.

Zur Kraftübertragung greift der Zahnriemen von der Einlaufseite bis zur Auslaufseite über eine vorgegebene Länge, der sogenannten Eingriffslänge, in das Zahngegenstück ein. Die Kraftübertragung auf das Zahngegenstück erfolgt dabei mit einer bestimmten Schubkraft, die proportional zur Zahnbelastung ist.

Der Zahnriemen selbst besitzt eine bestimmte Steifigkeit, die von der Steifigkeit der im Zahnriemen befindlichen Zugträger bzw. der sogenannten Corde, dem Cordabstand sowie der Zahnriemenbreite abhängt.

Bei den bekannten Linearantrieben führt eine zu große Schubkraft zu erhöhter Zahnbelastung. Zusätzlich treten bei den derzeitigen Linearantrieben am Auslauf des Zahnriemens, also auf der Zugseite am Ende der Eingriffslänge, sehr große Kräfte auf, die zu einem frühzeitigen Verschleiß des Zahnriemens und damit des Linearantriebs führen. Häufig treten auch störende Laufgeräusche auf.

Der Erfindung liegt die Aufgabe zugrunde, einen Linearantrieb der eingangs genannten Art anzugeben, bei dem eine optimierte Kraftübertragung von der Verzahnung des Zahnriemens auf die Verzahnung eines linearen Gegenstücks erreicht wird.

Diese Aufgabe wird bei einem Linearantrieb der eingangs genannten Art mit den Merkmalen des Anspruchs 1 gelöst. Weiterbildungen und vorteilhafte Ausgestaltungen ergeben sich aus den Unteransprüchen.

Die Erfindung zeichnet sich dadurch aus, dass bei einem Linearantrieb der eingangs genannten Art die Teilung der Riemenzähne (3) im vorgespannten Zustand des Zahnriemens (2) und bei der im Lastbetrieb auftretenden Zahnriemenbelastung geringfügig bis zu 0,8 % kürzer als die Teilung des Zahngegenstückes (5) ist, dass die Zahnflanke (6) des Riemenzahnes (3) im rechten Winkel oder nahezu im rechten Winkel zur Ebene des Zugträgers (7) steht, dass die Zahnlücke (4) des Zahngegenstückes (5) etwa 20 bis 80 % breiter als die Breite des Riemenzahnes (3) ist und dass die Riemenzähne (3) im Vergleich zu der hohen Steifigkeit der Zugträger (7) elastisch ausgebildet sind.

Dadurch, dass die Teilung am Zahnriemen bis 0,8 % kleiner ist als am Zahngegenstück, werden die Zähne an der Krafteinleitungsseite, also am Ende der Eingriffslänge, entlastet. Denn in der Praxis hat sich gezeigt, dass bei einem Zahnriemen, der in ein lineares Zahngegenstück mit gleicher Teilung greift, die höchste Last am Zahn der belasteten Auslaufseite, also auf der Zugseite am Ende der Eingriffslänge, auftritt, und bei einem Zahnriemen mit größerer Teilung als die des linearen Zahngegenstückes der Zahn an der Auslaufseite noch höher belastet wird.

Bei der Erfindung verändert sich die Belastung über die Eingriffslänge entsprechend der Verkürzung der Teilung der Riemenverzahnung. Bei einer bestimmten Verkürzung ist die Zahnbelastung am Ein- und Auslauf gleich und damit etwa halb so groß wie bei gleicher Teilung von Riemenverzahnung und linearem Gegenstück. Die dazu notwendige Teilung der Riemenverzahnung ist auch von der Belastung und der Steifigkeit der Zahnriemens abhängig. Eine weitere Verkürzung der Teilung der Riemenverzahnung verlagert die Belastung bzw. die Kraftübertragung immer mehr zu lastfreien Einlaufseite. Diese Verlagerung wirkt sich vorteilhaft aus, da die geometrischen Verhältnisse an der Einlaufseite günstiger sind.

Dadurch, dass die Zahnflanke des Riemenzahnes nahezu im rechten Winkel zur Zugträgerebene steht, wird eine optimale Kraftübertragung auf das lineare Zahngegenstück, eine gleichförmige Kraftübertragung beim Zahneingriff, eine günstige Spannungseinleitung in den Zugstrang und eine gleichmäßige Spannungsverteilung im Riemenzahn selbst bei gleichzeitiger großer Schubdeformation der Riemenzähne bewirkt.

Die Teilung des linearen Zahngegenstückes wird mindestens so groß gewählt, dass eine überlagerte elastische Dehnung des Zahnriemens aufgrund einer Vorspannung, einer Verlängerung durch Alterung sowie von Fertigungstoleranzen von Riemen und Zahngegenstück nicht zu einer größeren Teilung der Riemenverzahnung als die des Zahngegenstückes führen können.

Die Riemenzähne sind im Vergleich zu der hohen Steifigkeit der Zugträger des Zahnriemens elastisch ausgebildet. Es hat sich nämlich gezeigt, dass für eine Reduzierung der Zahnbelastung die Riemenlängssteifigkeit vergrößert oder die Schubsteifigkeit der Zähne verkleinert werden muss. Da sich die Längssteifigkeit des Zahnriemens schlecht beeinflussen lässt, sind erfindungsgemäß die Riemenzähne elastisch gestaltet. Wegen der bei der Kraftübertragung auftretenden Schubkraft können die Riemenzähne also etwas nachgeben und sich geringfügig verbiegen. Man sagt daher auch, dass der Riemenzahn schubelastisch ist.

Insbesondere wird ein reibungsfreies Ein- und Auszahnen der Riemenverzahnung in die Verzahnung des Gegenstückes erreicht. Dies reduziert das Laufgeräusch auf ein Minimum und schont die Riemenzähne. Die Schonung der Riemenzähne ist eine wesentliche Voraussetzung für einen störungsfreien Antrieb und für eine hohe Lebensdauer. Außerdem ist ein geringerer Wartungsaufwand notwendig. Der erfindungsgemäße Linearantrieb arbeitet somit zuverlässiger als herkömmliche Linearantriebe.

Gemäß einer vorteilhaften Weiterbildung der Erfindung ist vorgesehen, dass die Riemenzähne derart elastisch sind, dass trotz der unterschiedlichen Teilung der Riemenzähne und des Zahngegenstückes mindestens fünf in das Zahngegenstück eingreifende Riemenzähne eine Kraftübertragung auf das Zahngegenstück bewirken.

Wenn ein Riemenzahn in eine Zahnlücke des Zahngegenstückes eingreift und dabei eine Kraft auf das Zahngegenstück übertragen wird, verformt sich der Riemenzahn wegen seiner Elastizität geringfügig, indem er sich etwas verbiegt. Dies hat zur Folge, dass sich die Teilung der Riemenzähne örtlich etwas verändert, da sich wegen der elastischen Ausbildung der Riemenzähne ihr gegenseitiger Abstand ebenfalls geringfügig verändert. Somit sind bei dem erfindungsgemäßen Linearantrieb mehrere Riemenzähne gleichzeitig in Eingriff mit dem Zahngegenstück, wenn der Linearantrieb im Lastbetrieb arbeitet.

Vorzugsweise wird die Eingriffslänge des Linearantriebs derart groß gewählt, dass an der Einlaufseite kein geometrisches Klemmen auftritt.

Eine Weiterbildung der Erfindung sieht vor, dass der Flankenwinkel bei trapezförmigen Riemenzahnprofilen 80 bis 90° beträgt und dass bei runden Riemenzahnprofilen der Flankenwinkel der mittleren Tangente des Haupttragebereichs zwischen 80 und 90° liegt. Durch die geringe daraus resultierende Ausrückkraft sind vorteilhaft auch keine Niederhalterollen erforderlich.

Weiterhin ist vorgesehen, dass der Zahnriemen eine Profilkombination aus trapezförmigen und runden Riemenzähnen umfasst.

In einer Weiterbildung der Erfindung ist der Flankenwinkel des Zahngegenstückes etwas flacher als der Flankenwinkel des entsprechenden Riemenzahnes. Vorzugsweise ist der Flankenwinkel des Zahngegenstückes bis 5° flacher als der Flankenwinkel des entsprechenden Riemenzahnes mit trapezförmigem Zahnprofil. Der Flankenwinkel des Zahngegenstückes ist vorzugsweise bis 5° flacher als der Flankenwinkel der mittleren Tangente des entsprechenden Riemenzahnes mit rundem Zahnprofil.

In einer vorteilhaften Ausgestaltung der Erfindung ist das lineare Zahngegenstück eine Zahnstange. Die in die Zahnlücken des Zahngegenstücks greifenden Zähne gehören vorzugsweise zur Außenverzahnung eines doppelverzahnten Zahnriemens, und die Umlenkrollen des Zahnriemens sind als Zahnräder ausgebildet.

Mit der einen Verzahnung greifen die Riemenzähne in das Zahngegenstück ein, und mit der anderen Verzahnung wird der Zahnriemen über die als Zahnräder ausgebildeten Umlenkrollen in an sich bekannter Weise angetrieben.

Nachfolgend wird die Erfindung anhand von Ausführungsbeispielen erläutert, die in der Zeichnung dargestellt sind. In dieser zeigen:
- Fig. 1: eine schematische und stark übertriebene Darstellung der Funktionsweise des Linearantriebs,
- Fig. 2: einen Querschnitt durch den Riemenzahn mit trapezförmigem Zahnprofil und
- Fig. 3: einen Querschnitt durch den Riemenzahn mit rundem Zahnprofil.

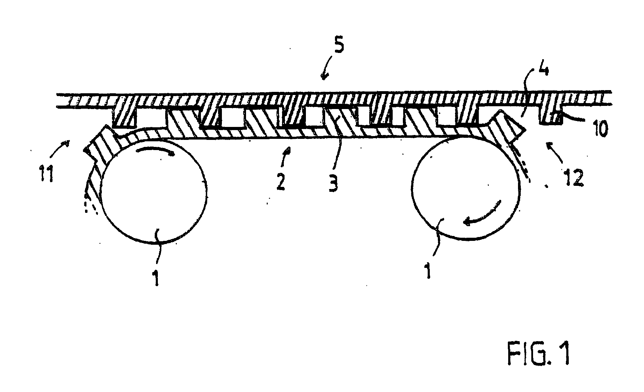

Fig. 1 zeigt schematisch und stark übertrieben die Funktionsweise des erfindungsgemäßen Linearantriebs.

Der Linearantrieb umfasst einen Zahnriemen 2, der über Umlenkrollen 1 geführt und von einem hier nicht dargestellten Antrieb bewegt wird. In Fig. 1 ist nur der obere Teil des Zahnriemens 2 dargestellt. Tatsächlich erstreckt sich der Zahnriemen 2 auch im unteren Teil weiter, d. h. der Zahnriemen 2 ist in an sich bekannter Weise endlos ausgebildet.

Der Zahnriemen 2 besteht aus einem elastomeren Material und besitzt in bekannter Weise in seinem Inneren einen nicht näher dargestellten Zugträger aus Glas oder Stahl. In Abhängigkeit von dem jeweiligen Anwendungsfall und von der jeweiligen Betriebsart wird der Zahnriemen 2 vorgespannt. Dies erfolgt dadurch, dass der Abstand zwischen den beiden Umlenkrollen 1 vergrößert wird, so dass sich der Zahnriemen 2 spannt.

Um den Zahnriemen 2 über mindestens eine Umlenkrolle 1 anzutreiben, können die Umlenkrollen 1 als Zahnräder ausgebildet sein. In diesem Fall besitzt der Zahnriemen neben der dargestellten oberen Verzahnung noch eine weitere Innenverzahnung. Wie in Fig. 1 dargestellt, kann der Zahnriemen 2 aber auch ohne Zahnräder angetrieben werden, z. B. in Folge der zwischen den Umlenkrollen 1 und dem Zahnriemen 2 auftretenden Reibungskraft.

Zur Kraftübertragung greifen die Zähne 3 des Zahnriemens 2 von der Einlaufseite 11 her über die sogenannte Eingriffslänge, die frei wählbar ist, in die Zahnlücken 4 eines linearen Zahngegenstückes 5 ein und werden an der Auslaufseite 12, also am Ende der Eingriffslänge, vom Zahngegenstück 5 getrennt.

Erfindungsgemäß ist die Teilung der Riemenzähne 3 im vorgespannten Zustand des Zahnriemens 2 und bei der im Lastbetrieb des Linearantriebes auftretenden Zahnriemenbelastung geringfügig bis zu 0,8 % kürzer als die Teilung des Zahngegenstückes 5, welches vorzugsweise als Zahnstange aus Stahl ausgebildet ist. Zur Veranschaulichung der Funktionsweise ist in Fig. 1 die kürzere Teilung der Riemenverzahnung stark übertrieben dargestellt.

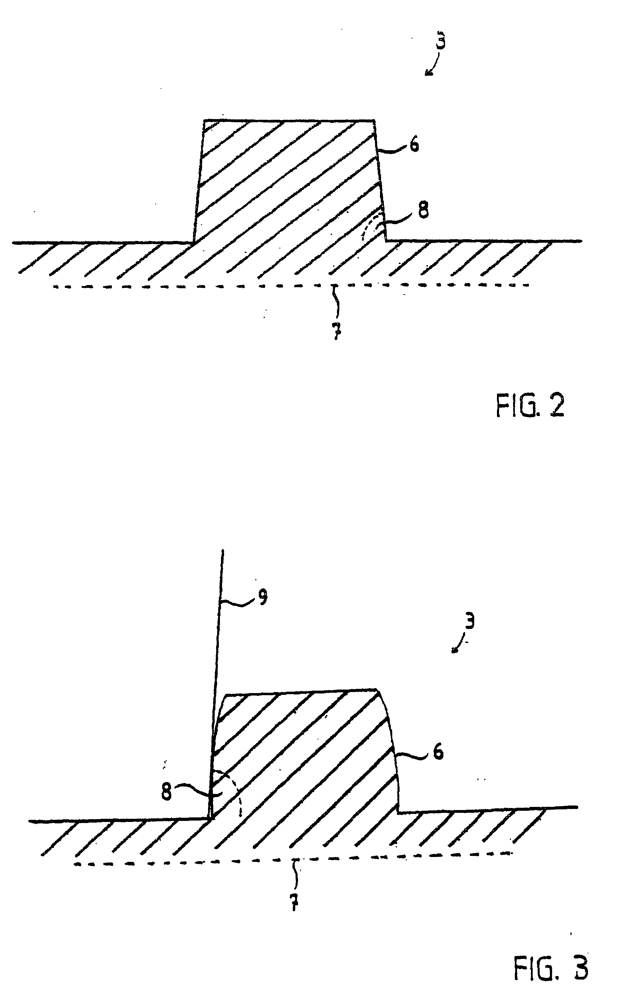

Die Zahnflanken 6 eines jeden Riemenzahnes 3 stehen gemäß Fig. 2 nahezu im rechten Winkel zur Ebene des angedeuteten Zugträgers 7 bzw. der Zugstränge. Jede Zahnlücke 4 des Zahngegenstückes 5 ist fast doppelt so breit wie die Breite eines Riemenzahnes 3. Vorzugsweise ist die Zahnlücke 4 des Zahngegenstückes 5 etwa 20 % bis 80 % breiter als die Breite des Riemenzahnes 3.

Über das Zahnprofil wird vom Zahnriemen 2 die Kraft auf das lineare Zahngegenstück 5 übertragen. Der Zahnriemen 2 besitzt eine bestimmte Steifigkeit, die unter anderem von der Steifigkeit der Zugträger 7 bzw. der sogenannten Corde, dem Cordabstand sowie der Zahnriemenbreite abhängt.

Bei herkömmlichen Linearantrieben treten an der Auslaufseite 12 des Zahnriemens 2 sehr große Kräfte auf, die fast vollständig von dem dort befindlichen Riemenzahn 3 aufgenommen werden und zu einer außerordentlichen Belastung an diesem Riemenzahn 3 führen. Insbesondere die an der Auslaufseite 12 bei der Trennung von Riemenzahn 3 und Zahngegenstück 5 auftretenden Reibkräfte führen zu einem frühzeitigen Verschleiß und einer großen Anfälligkeit des Linearantriebs.

Durch die erfindungsgemäße kürzere Teilung der Riemenzahnverteilung werden die Zähne an der Krafteinleitungsseite, also am Ende der Eingriffslänge, entlastet. Dies ist in Fig. 1 übertrieben dargestellt. Die Belastung der Riemenzähne 3 verändert sich über die Eingriffslänge entsprechend der Verkürzung der Teilung der Riemenverzahnung.

Bei einer bestimmten Verkürzung ist die Zahnbelastung an der Ein- und Auslaufseite 11, 12 gleich und damit etwa halb so groß wie bei gleicher Teilung von Riemenverzahnung und Zahngegenstück 5. Eine weitere Verkürzung der Teilung der Riemenverzahnung verlagert die Belastung bzw. Kraftübertragung immer mehr zur Einlaufseite 11. Entsprechend der übertriebenen Darstellung in Fig. 1 liegt schließlich die gesamte Belastung auf der Einlaufseite 11. Schon diese Verlagerung wirkt sich vorteilhaft aus, da an der Einlaufseite 11 die geometrischen Verhältnisse günstiger sind.

Sehr viel vorteilhafter ist es jedoch, eine erfindungsgemäße Teilung zu wählen, bei der die Kraftübertragung über die gesamte Eingriffslänge verteilt ist. Mindestens sollen fünf Riemenzähne 3 gleichzeitig in Eingriff mit dem Zahngegenstück 5 sein. Dies lässt sich dadurch erreichen, dass die Riemenzähne 3 im Vergleich zu der hohen Steifigkeit der Zugträger 7 elastisch ausgebildet sind.

Wenn von den Riemenzähnen 3 eine Kraftübertragung auf das Zahngegenstück 5 erfolgt, wirkt auf die Riemenzähne 3 eine Schubkraft ein. Diese Schubkraft führt dazu, dass die elastisch ausgebildeten Riemenzähne 3 etwas nachgeben, d. h. die Riemenzähne sind schubelastisch. Wenn sich die Riemenzähne 3 daher während der Kraftübertragung etwas verbiegen, ändert sich der Abstand zu benachbarten Riemenzähnen geringfügig, und dies hat zur Folge, dass sich örtlich gesehen auch die Teilung der Riemenzähne 3 etwas verändert. Somit lässt sich erreichen, dass mindestens fünf Riemenzähne 3 gleichzeitig in Eingriff mit dem Zahngegenstück 5 sind, wenn der Linearantrieb im Lastbetrieb arbeitet.

Dadurch wird eine günstige Lastverteilung über viele in das Zahngegenstück 5 eingreifende Riemenzähne 3 erreicht. Insbesondere wird aber ein reibungsfreies Ein- und Auszahnen der Riemenverzahnung 3 in die Verzahnung 10 des Gegenstückes 5 erreicht. Dies reduziert das Laufgeräusch auf ein Minimum und schont die Riemenzähne 3. Die Schonung der Riemenzähne 3 ist eine wesentliche Voraussetzung für einen störungsfreien Antrieb und für eine hohe Lebensdauer. Außerdem ist ein geringerer Wartungsaufwand notwendig. Der erfindungsgemäße Linearantrieb arbeitet somit zuverlässiger als herkömmliche Linearantriebe.

Fig. 2 zeigt einen Querschnitt durch einen Riemenzahn 3 mit trapezförmigem Zahnprofil. Die Zahnflanke 6 steht also nahezu im rechten Winkel zur Ebene des hier mit gestrichelter Linie angedeuteten Zugträgers 7. In Fig. 3 ist ein Querschnitt durch einen Riemenzahn 3 mit rundem Zahnprofil dargestellt.

Der Flankenwinkel 8 des in Fig. 2 dargestellten trapezförmigen Riemenzahnprofils beträgt etwa 85°. Bei dem in Fig. 3 dargestellten runden Riemenzahnprofil beträgt der Flankenwinkel 8 der mittleren Tangente 9 des Haupttragebereichs ebenfalls etwa 85°.

Dadurch wird eine gleichförmige Kraftübertragung beim Zahneingriff, eine günstige Spannungseinleitung in den Zugstrang 7, eine gleichmäßige Spannungsverteilung im Riemenzahn 3 selbst bei gleichzeitiger großer Schubdeformation bewirkt.

Das Zahngegenstück 5 kann als Zahnstange mit einer endlichen bestimmten Länge ausgebildet sein. Es ist auch möglich, einzelne kurze Zahnstangensegmente zu verwenden, die durch Gelenke miteinander verbunden sind. Somit ist es denkbar, die aus den einzelnen Segmenten bestehende Zahnstange um Umlenkungen zu führen. Die gesamte (Segment-) Zahnstange lässt sich dann endlos ausbilden.

### Bezugszeichenliste (ist Bestandteil der Beschreibung)

- 1: Umlenkrolle
- 2: Zahnriemen
- 3: Riemenzahn
- 4: Zahnlücke des Gegenstückes
- 5: Zahngegenstück
- 6: Zahnflanke
- 7: Zugträger
- 8: Flankenwinkel
- 9: Tangente
- 10: Zahn des Gegenstückes
- 11: Einlaufseite
- 12: Auslaufseite

## Patentansprüche

1. Linearantrieb mit einem angetriebenen und im vorgespannten Zustand über Umlenkrollen (1) geführten Zahnriemen (2), welcher mindestens einen Zugträger (7) besitzt, und dessen Riemenzähne (3) eine bestimmte Teilung besitzen und über eine bestimmte Länge, der sogenannten Eingriffslänge, in die Zahnlücken (4) eines linearen Zahngegenstücks (5) greifen, wobei die Teilung der Riemenzähne (3) im vorgespannten Zustand des Zahnriemens (2) und bei der im Lastbetrieb auftretenden Zahnriemenbelastung geringfügig bis zu 0,8 % kürzer als die Teilung des Zahngegenstückes (5) ist und die Zahnflanke (6) des Riemenzahnes (3) im rechten Winkel oder nahezu im rechten Winkel zur Ebene des Zugträgers (7) steht und die Zahnlücke (4) des Zahngegenstückes (5) etwa 20 bis 80 % breiter als die Breite des Riemenzahnes (3) ist und wobei die Riemenzähne (3) im Vergleich zu der hohen Steifigkeit der Zugträger (7) elastisch ausgebildet sind.

2. Linearantrieb nach Anspruch 1, **dadurch gekennzeichnet, dass** die Riemenzähne (3) derart elastisch sind, dass trotz der unterschiedlichen Teilung der Riemenzähne (3) und des Zahngegenstückes (5) mindestens fünf in das Zahngegenstück (5) eingreifende Riemenzähne (3) eine Kraftübertragung auf das Zahngegenstück (5) bewirken.

3. Linearantrieb nach Anspruch 1 oder 2, **dadurch gekennzeichnet, dass** der Flankenwinkel (8) bei trapezförmigen Riemenzahnprofilen 80 bis 90° beträgt und dass bei runden Riemenzahnprofilen der Flankenwinkel (8) der mittleren Tangente (9) des Haupttragebereichs zwischen 80 und 90° liegt.

4. Linearantrieb nach Anspruch 3, **dadurch gekennzeichnet, dass** der Zahnriemen (2) eine Profilkombinationen aus trapezförmigen und runden Riemenzähnen (3) umfasst.

5. Linearantrieb nach einem der Ansprüche 1 bis 4, **dadurch gekennzeichnet, dass** der Flankenwinkel des Gegenstückzahnes (10) etwas flacher als der Flankenwinkel (8) des entsprechenden Riemenzahnes (3) ist.

6. Linearantrieb nach Anspruch 5, **dadurch gekennzeichnet, dass** der Flankenwinkel des Gegenstückzahnes (10) bis 5 ° flacher als der Flankenwinkel (8) des entsprechenden Riemenzahnes (3) mit trapezförmigem Zahnprofil ist.

7. Linearantrieb nach Anspruch 5, **dadurch gekennzeichnet, dass** der Flankenwinkel des Gegenstückzahnes (10) bis 5 ° flacher als der Flankenwinkel (8) der mittleren Tangente (9) des entsprechenden Riemenzahnes (3) mit rundem Zahnprofil ist.

8. Linearantrieb nach einem der Ansprüche 1 bis 7, **dadurch gekennzeichnet, dass** das Zahngegenstück (5) eine Zahnstange ist.

9. Linearantrieb nach einem der Ansprüche 1 bis 8, **dadurch gekennzeichnet, dass** die in die Zahnlücken (4) des Zahngegenstücks (5) greifenden Zähne (3) zur Außenverzahnung eines doppelverzahnten Zahnriemens gehören und dass die Umlenkrollen (1) des Zahnriemens (2) als Zahnräder ausgebildet sind.

## Claims

1. Linear drive with a driven toothed belt (2) guided in the pretensioned state by means of guide pulleys (1) and which is provided with at least one tension carrier (7) and whose belt teeth (3) have a specific pitch and over a specific length, the so-called engagement length, engage in the tooth gaps (4) of a linear tooth counterpart (5), the pitch of the belt teeth (3) in the pretensioned state of the toothed belt (2) and in the case of the toothed belt loading occurring in load operation is slightly and up to 0.8% shorter than the pitch of the tooth counterpart (5) and the tooth flank (6) of the belt tooth (3) is at right angles or almost at right angles to the plane of the tension carrier (7) and the tooth gap (4) of the tooth counterpart (5) is approximately 20 to 80% wider than the width of the belt tooth (3), which are constructed elastically compared with the high stiffness of the tension carrier (7).

2. Linear drive according to claim 1, **characterized in that** the belt teeth (3) are constructed elastically in such a way that despite the different pitch of the belt teeth (3) and the tooth counterpart (5) at least five belt teeth (3) engaging in the tooth counterpart (5) bring about a force transfer to the tooth counterpart (5).

3. Linear drive according to claim 1 or 2, **characterized in that**, in the case of trapezoidal belt tooth profiles, the flank angle (8) is 80 to 90° and that in the case of round belt tooth profiles the flank angle (8) of the mean tangent (9) of the main support area is between 80 and 90°.

4. Linear drive according to claim 3, **characterized in that** the toothed belt (2) comprises a profile combination of trapezoidal and round belt teeth (3).

5. Linear drive according to one of the claims 1 to 4, **characterized in that** the flank angle of the counterpart tooth (10) is somewhat more shallow than the flank angle (8) of the corresponding belt tooth (3).

6. Linear drive according to claim 5, **characterized in that** the flank angle of the counterpart tooth (10) is up to 5° more shallow than the flank angle (8) of the corresponding belt tooth (3) with trapezoidal tooth profile.

7. Linear drive according to claim 5, **characterized in that** the flank angle of the counterpart tooth (10) is up to 5° more shallow than the flank angle (8) of the mean tangent (9) of the corresponding belt tooth (3) in the case of a round tooth profile.

8. Linear drive according to one of the claims 1 to 7, **characterized in that** the tooth counterpart (5) is a rack.

9. Linear drive according to one of the claims 1 to 8, **characterized in that** the teeth (3) engaging in the tooth gaps (4) of the tooth counterpart (5) belong to the external teeth of a double-toothed tooth belt and that the guide pulleys (1) of the toothed belt (2) are constructed as gears.

## Revendications

1. Entraînement linéaire comprenant une courroie dentée (2) entraînée et, en état précontraint, guidée au moyen de rouleaux de renvoi (1), qui possède au moins un support de traction (7) et dont les dents de courroie (3) possèdent un pas déterminé et s'engrènent sur une longueur déterminée, dite longueur d'action, dans les entredents (4) d'un pendant denté linéaire (5), le pas des dents de courroie (3), en état précontraint de la courroie dentée (2) et à sollicitation de la courroie dentée en fonctionnement en charge, étant plus court, de 0,8% au maximum, que le pas du pendant denté (5) et le flanc de dent (6) de la courroie dentée (3), qui forme un angle droit, ou à peu près droit, avec le plan du support de traction (7) et l'entredent (4) du pendant denté (5), étant plus large, de 20 à 80% environ, que la largeur de la courroie dentée (3), les dents de courroie (3) étant conçues élastiques en comparaison avec la rigidité élevée des supports de traction (7).

2. Entraînement linéaire suivant la revendication 1, **caractérisé en ce que** les dents de courroie (3) sont élastiques, de sorte que cinq dents au moins de la courroie (3), qui s'engrènent dans le pendant denté (5), causent une transmission de force au pendant denté (5) malgré la différence de pas entre les dents de courroie (3) et le pendant denté (5).

3. Entraînement linéaire suivant la revendication 1 ou 2, **caractérisé en ce que** l'angle de flanc (8) est de 80 à 90° en cas de profil trapézoïdal des dents de courroie, et qu'en cas de profil rond des dents de courroie, l'angle de flanc (8) de la tangente centrale (9) de la zone porteuse principale est compris entre 80 et 90°.

4. Entraînement linéaire suivant la revendication 3, **caractérisé en ce que** la courroie dentée (2) comprend une combinaison de profils de dents de courroie (3) trapézoïdaux et ronds.

5. Entraînement linéaire suivant une des revendications 1 à 4, **caractérisé en ce que** le flanc de la dent du pendant (10) est légèrement plus plat que l'angle de flanc (8) de la dent de courroie (3) correspondante.

6. Entraînement linéaire suivant la revendication 5, **caractérisé en ce que** l'angle de flanc de la dent du pendant (10) est de 5° plus plat que l'angle de flanc (8) de la dent de courroie (3) correspondante à profil de dent trapézoïdal.

7. Entraînement linéaire suivant la revendication 5, **caractérisé en ce que** l'angle de flanc de la dent du pendant (10) est de 5° plus plat que l'angle de flanc (8) de la tangente centrale (9) de la dent de courroie (3) correspondante à profil de dent rond.

8. Entraînement linéaire suivant une des revendications 1 à 7, **caractérisé en ce que** le pendant denté (5) est une crémaillère.

9. Entraînement linéaire suivant une des revendications 1 à 8, **caractérisé en ce que** les dents (3), qui s'engrènent dans les entredents (4) du pendant denté (5), font partie de la denture extérieure d'une courroie à double denture, et que les rouleaux de renvoi (1) de la courroie dentée (2) sont conçus comme roues dentées.
